# EUROPÄISCHE PATENTSCHRIFT

(11) **EP 1 294 531 B1**
(45) Veröffentlichungstag und Bekanntmachung des Hinweises auf die Patenterteilung: **09.04.2008**
(21) Anmeldenummer: 01953184.7
(22) Anmeldetag: 29.06.2001
(51) Int. Cl.: B23Q 7/14, B23Q 7/04, B23Q 41/02

(54) **ANLAGE ZUR BEARBEITUNG VON WERKSTÜCKEN MIT WENIGSTENS EINER WERKZEUG-MASCHINE**
SYSTEM FOR MACHINING WORK PIECES COMPRISING AT LEAST ONE MACHINE TOOL
DISPOSITIF D'USINAGE DE PIECES AU MOYEN D'AU MOINS UNE MACHINE-OUTIL

(30) Priorität: 29.06.2000 DE 10031731
(43) Veröffentlichungstag der Anmeldung: 26.03.2003
(73) Patentinhaber: Cross Hüller GmbH, 71636 Ludwigsburg (DE)
(72) Erfinder: GEIGER, Dietrich, 71723 Grossbottwar (DE); HORN, Wolfgang, 73035 Göppingen (DE); STENGELE, Gerald, 71636 Ludwigsburg (DE)
(74) Vertreter: Rau, Manfred
(86) Internationale Anmeldenummer: PCT/EP2001/007485
(87) Internationale Veröffentlichungsnummer: WO 2002/000388

(56) Entgegenhaltungen:
- DE-A- 3 134 833
- DE-A- 3 925 568
- DE-A- 19 756 278
- DE-C- 4 422 416
- DE-U- 29 920 910
- US-A- 4 809 422

## Beschreibung

Die Erfindung betrifft eine Anlage nach dem Oberbegriff des Anspruches 1

Bei einer derartigen aus der DE 197 56 278 A1 bekannten Werkzeug-Maschine erfolgt die Zuführung der zu bearbeitenden Werkstücke in der Weise, dass die Be- und Entlade-Einrichtung einen um eine horizontale Schwenkachse schwenkbaren Schwenkhebel aufweist, der an seinem freien Ende ein Werkstück-Übergabemittel aufweist, dass gegenüber dem Schwenkhebel ebenfalls um eine horizontale Achse schwenkbar gelagert ist. Die Zufuhr der Werkstücke erfolgt von oben in den Arbeitsraum.

Aus DE 39 25 568 A1 ist eine Fertigungsanlage für die spanabhebende Bearbeitung von Mittel- und Großteilen bekannt, bei der die Werkstücke auf einem Schlitten einer Werkzeug-Maschine zugeführt werden. Die Schlitten sind auf unter ihnen liegenden Bahnen geführt.

Aus der DE 43 24 575 A1 (entsprechend US-Patent 5,321,874) ist es bekannt, in einer Reihe angeordnete Werkzeug-Maschinen in der Weise miteinander zu verketten, dass oberhalb der Werkzeug-Maschinen und der vor ihnen angeordneten Werkstück-Träger eine Transportbahn angeordnet ist, auf der Horizontal-Transport-Wagen verschiebbar angeordnet sind, die vertikal verschiebbare Halteträger aufweisen, an deren unterem Ende jeweils Werkstück-Übergabemittel in Form von Greifern angeordnet sind, die die Werkstücke von oben auf den zur Werkzeug-Maschine gehörenden ortsfesten Werkstück-Träger aufsetzen und nach der Bearbeitung nach oben wieder abheben. Eine solche Ausgestaltung ist außerordentlich raumaufwendig.

Aus der AT-PS 288 112 ist eine Anlage zur Bearbeitung von Werkstücken mit mehreren in einer Reihe angeordneten Werkzeug-Maschinen bekannt. Vor den Werkzeug-Maschinen ist ein Transportwagen auf dem Boden befindlichen Schienen verfahrbar angeordnet. Der Transportwagen weist Arme nach Art eines Gabelstaplers auf, auf denen auf Paletten befindliche Werkstücke von einem Vorratsregal zur jeweiligen Werkzeug-Maschine transportiert werden. Die Paletten werden von der Seite in den Arbeitsraum der Werkzeug-Maschine eingefahren; anschließend werden sie vertikal nach unten abgesetzt. Auch diese Ausgestaltung ist konstruktiv und vom Platzbedarf her sehr aufwendig und erfordert jeweils zur Be- und Entladung einen relativ hohen Zeitaufwand.

Aus der DE 195 16 849 C2 (entsprechend US-Patent 6,135,696) ist es bekannt, nebeneinander angeordnete Werkzeug-Maschinen in der Weise miteinander zu verketten, dass den Werkzeug-Maschinen die Werkstücke von unten zugeführt werden. Hierbei ist zwar eine kompakte Bauweise mit geringen bewegten Massen und damit kurzen Be- und Entlade-Zeiten möglich; die Späne und die Kühlschmierstoffe fallen aber von der Bearbeitungsstelle in Richtung zur Be- und Entlade-Einrichtung. Letztere ist deshalb nicht oder nur mit hohem konstruktiven Aufwand gegen Kühlschmierstoffe und Späne zu schützen. Es sind komplizierte Bewegungen der Werkstück-Greifer der Be- und Entlade-Einrichtung notwendig, um an die Werkstück-Aufnahme-Mittel der Werkzeug-Maschine zu gelangen.

Der Erfindung liegt die Aufgabe zugrunde, eine Anlage der gattungsgemäßen Art so auszugestalten, dass eine Be- und Entladung mit geringem konstruktiven Aufwand und mit geringen Be- und Entlade-Zeiten bei gleichzeitig hoher Betriebssicherheit möglich ist.

Diese Aufgabe wird durch die Merkmale im Kennzeichnungsteil des Anspruches 1 gelöst. Durch die erfindungsgemäßen Maßnahmen erhält die erfindungsgemäße Anlage eine kompakte Ausgestaltung, d.h. geringe bewegte Massen mit sehr kleinen Be- und Entlade-Bewegungen der Werkstück-Übergabemittel. Aufgrund der Anordnung können nur sehr wenig Kühlschmierstoffe und nur in sehr geringem Umfang Späne vom Arbeitsraum in die Be- und Entlade-Einrichtung verschleppt werden. Die Übergabe von der Be- und Entlade-Einrichtung auf die Werkstück-Aufnahmemittel der Werkzeug-Maschine und umgekehrt erfolgt grundsätzlich nur durch Horizontal-Bewegungen des Werkstück-Aufnahmemittels und des Werkstück-Übergabemittels, wobei beide gleichachsig verschiebbar sind.

Die Ausgestaltung nach den Ansprüchen 2 und 3 führt zu einer weiteren Vereinfachung der Be- und Entlade-Einrichtung.

Bevorzugt werden die erfindungsgemäßen Maßnahmen zu einer Verkettung mehrerer Werkzeug-Maschinen gemäß Anspruch 4 oder 5 eingesetzt.

Die weitere Ausgestaltung nach Anspruch 6 bringt den Vorteil mit sich, dass ein Werkstück-Übergabemittel zur Aufnahme eines in der Werkzeug-Maschine bereits bearbeiteten Werkstücks dient, während mit dem anderen Werkstück-Übergabemittel ein zu bearbeitendes Werkstück zugeführt wird. Dies führt zu einer weiteren Reduktion der Be- und Entlade-Zeiten.

Insbesondere zur Grundanpassung an unterschiedliche Werkstücke kann die Ausgestaltung nach Anspruch 7 von Vorteil sein.

Die Weiterbildung nach Anspruch 8 dient dem schnellen Ergreifen und Loslassen eines Werkstücks und fördert somit die Verkürzung der Be- und Entlade-Zeiten.

Durch die Ausgestaltung nach Anspruch 9 wird erreicht, dass ein Werkstück nacheinander bei aufeinanderfolgenden Werkzeugmaschinen in gegeneinander verdrehten Positionen eingespannt werden kann. Außerdem kann ein Werkstück, beispielsweise nach der Bearbeitung, so gedreht werden kann, dass Späne und/oder Kühlflüssigkeit ausgeschüttet werden.

Weitere Merkmale, Vorteile und Einzelheiten der Erfindung ergeben sich aus der nachfolgenden Beschreibung eines Ausführungsbeispiels anhand der Zeichnung. Es zeigt
- Fig. 1: eine Seitenansicht einer Werkzeug-Maschine mit einer Be- und Entlade-Einrichtung,
- Fig. 2: die Werkzeug-Maschine nach Fig. 1 in einer Stirnansicht entsprechend der Schnittlinie II-II in Fig. 1,
- Fig. 3: eine Draufsicht auf die Be- und Entlade-Einrichtung entsprechend dem Sichtpfeil III in Fig. 1,
- Fig. 4: eine perspektivische Draufsicht auf eine schematisch dargestellte Anlage mit mehreren Werkzeug-Maschinen und einer Be- und Entlade-Einrichtung,
- Fig. 5 bis 7: eine Werkzeug-Maschine mit einer Be- und Entlade-Einrichtung in stark schematisierter Seitenansicht, mit jeweils unterschiedlichen Positionen der Werkstück-Übergabemittel und Werkstück-Aufnahmemittel,
- Fig. 8: eine Seitenansicht eines Teils der Werkzeug-Maschine mit einer abgewandelten Ausführungsform einer Be- und Entlade-Einrichtung,
- Fig. 9: eine Draufsicht auf die Be- und Entlade-Einrichtung entsprechend dem Sichtpfeil IX in Fig. 8,
- Fig. 10 bis 12: Teil-Draufsichten auf die Be- und Entlade-Einrichtung in verschiedenen Positionen ihrer Werkstück-Greifer,
- Fig. 13: eine Draufsicht auf eine weitere Ausführungsform einer Be- und Entlade-Einrichtung und
- Fig. 14: eine perspektivische Draufsicht auf eine schematisch dargestellte Anlage mit mehreren Werkzeug-Maschinen und einer Be- und Entlade-Einrichtung.

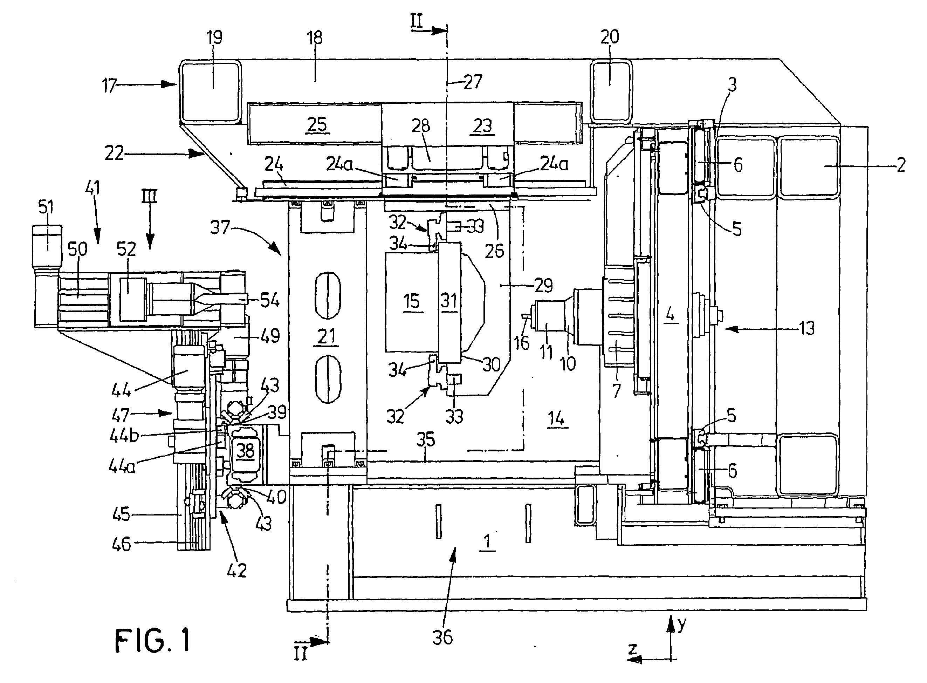

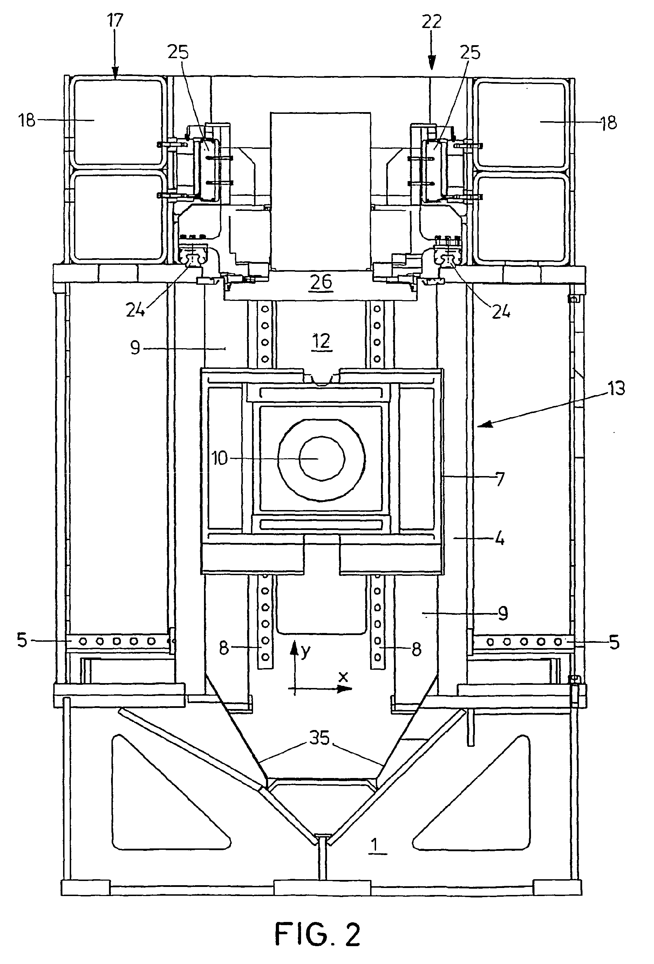

Wie sich insbesondere aus den Figuren 1 und 2 ergibt, ist auf einem Maschinenbett 1 ein rahmenartig ausgebildeter Ständer 2 angebracht. An einer Stirnseite 3 des Ständers 2 ist ein horizontal in einer x-Richtung verfahrbarer x-Schlitten 4 auf x-Führungen 5 verschiebbar angebracht. Der Antrieb erfolgt mit x-Linearmotoren 6. Am x-Schlitten 4 ist wiederum ein vertikal in y-Richtung verfahrbarer y-Schlitten 7 auf y-Führungen 8 verschiebbar angebracht. Der Antrieb erfolgt mittels y-Linearmotoren 9. Auf dem y-Schlitten 7 wiederum ist eine von einem nicht dargestellten Motor drehantreibbare Arbeits-Spindel 10 gelagert, die an ihrem dem Ständer 2 abgewandten Ende eine Werkzeug-Aufnahme 11 aufweist. Die Arbeits-Spindel 10 erstreckt sich in Richtung zum Ständer 2 durch eine im x-Schlitten 4 ausgebildete, zwischen den y-Führungen 8 angeordnete Öffnung 12 in den rahmenartigen Ständer 2 hinein. Die Arbeits-Spindel 10 erstreckt sich also in einer z-Richtung senkrecht zu einer durch die x-Richtung und die y-Richtung aufgespannten vertikalen Ebene. Die bisher geschilderte, als Kreuzschlitten ausgebildete Arbeits-Spindel-Bewegungs-Einheit 13 hat einen Grundaufbau, der als Box-in-a-box-Bauweise allgemein bekannt ist und beispielsweise in der EP 0 742 072 B1 (entsprechend US 5,662,568 A) dargestellt und beschrieben ist. Alternativ kann die Verschiebbarkeit der Arbeits-Spindel in der x-y-Ebene auch durch Koppeln erfolgen, wie sie aus der EP 0 916 446 A1 (entsprechend US-Ser. No. 09/161 891) bekannt sind.

Vor der Werkzeug-Aufnahme 11 und der Arbeits-Spindel 10 befindet sich ein Arbeitsraum 14, in dem ein Werkstück 15 mittels eines in der Werkzeug-Aufnahme 11 gehaltenen Werkzeugs 16 bearbeitet wird. Oberhalb dieses Arbeitsraumes 14 ist ein oberer Rahmen 17 angeordnet, der aus sich in z-Richtung erstreckenden Längsträgern 18 und sich in x-Richtung erstreckenden Querträgern 19, 20 besteht, und der sich an seinem dem Ständer 2 abgewandten Ende über Stützen 21 auf dem Maschinenbett 1 abstützt. Diese insgesamt sehr steife Bauweise eines aus dem Maschinenbett 1, dem Ständer 2, dem Rahmen 17 und den Stützen 21 bestehenden MaschinenGestells 22 ist von großem Vorteil. Dieses Maschinen-Gestell 22 umgrenzt den Arbeitsraum 14.

Zwischen den Längsträgern 18 des Rahmens 17 ist ein in z-Richtung bewegbarer z-Schlitten 23 auf z-Führungen 24 mittels Führungsschuhen 24a verschiebbar geführt. Der Antrieb erfolgt mittels z-Linearmotoren 25. Alternativ kann der Antrieb in x-, y- und z-Richtung auch mittels Rotations-Motoren, beispielsweise also Elektro-Motoren, über Kugelrollspindeln erfolgen.

An der Unterseite des z-Schlittens 23 ist ein Werkstück-Drehtisch 26 angebracht, der um seine vertikale, also in y-Richtung verlaufende Mittel-Achse 27 mittels eines Drehantrieb-Motors 28 drehantreibbar gelagert ist. An der Unterseite des Drehtisches 26 ist ein als Werkstück-Träger 29 ausgebildetes Werkstück-Aufnahmemittel angebracht, der eine Ausnehmung 30 aufweist, die einem das Werkstück 15 tragenden, im wesentlichen plattenförmig ausgebildeten Adapter 31 angepaßt ist. Der Träger 29 weist weiterhin als Haltemittel Spann-Vorrichtungen 32 auf, die mittels Spann-Antrieben 33 betätigbar sind. Die Spann-Vorrichtungen 32 halten den Adapter 31 mittels Spann-Backen 34 in der Ausnehmung 30 des Trägers 29, wodurch das in einer genau definierten Lage auf dem Adapter 31 montierte Werkstück 15 wiederum eine genau definierte Lage relativ zum Träger 29 und damit zum Drehtisch 26 erhält.

Die Spann-Vorrichtungen 32 befinden sich oberhalb und unterhalb der Ausnehmung 30, halten den Adapter 31 also in seinem oberen und seinem unteren Bereich. Wie insbesondere Fig. 1 entnehmbar ist, ragt das Werkstück 15 in jeder Position des z-Schlittens 23 und jeder Drehstellung des Drehtisches 26 über den gesamten Arbeitsraum 14 in eine vom Werkstück-Träger 29 freie Lage vor. Unterhalb von ihm befinden sich im Maschinenbett 1 ausgebildete Späne-Abförder-Einrichtungen 35 in Form von Späne-Rutschen.

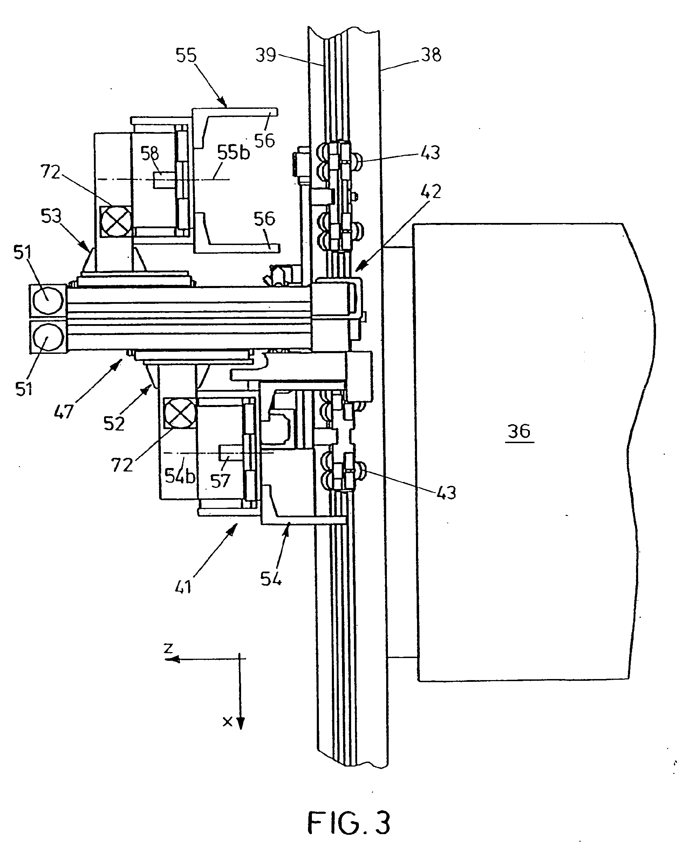

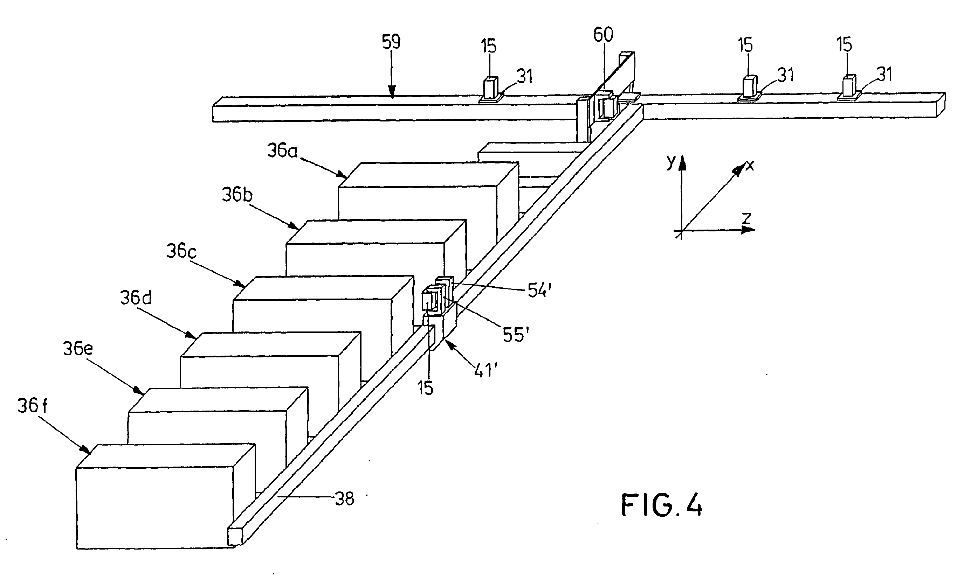

Von den bisher geschilderten Werkzeug-Maschinen 36 werden mehrere grundsätzlich gleichartig ausgebildete, aber für unterschiedliche Bearbeitungsvorgänge an demselben Werkstück 15 vorgesehene Werkzeug-Maschinen 36a bis 36f (siehe Fig. 4) nebeneinander in einer in x-Richtung verlaufenden Reihe angeordnet, die zu einem flexiblen Produktionssystem verkettet sind. In Fig. 3 sind hiervon nur zwei Werkzeugmaschinen 36a, 36b dargestellt.

An der Be- und Entlade-Seite 37, die den Stützen 21 zugeordnet ist, die also an der der Arbeits-Spindel-Bewegungs-Einheit 13 entgegengesetzten Seite der Werkzeug-Maschinen 36a bis 36f liegt, ist eine die Maschinen 36a bis 36f verbindende Transportbahn 38 vorgesehen, die an den Maschinen-Gestellen 22, insbesondere dem jeweiligen Maschinenbett 1, befestigt ist. Die Transportbahn 38 weist jeweils eine obere und eine untere Prismen-Führung 39, 40 auf, auf der eine Be- und Entlade-Einrichtung 41 in x-Richtung verschiebbar geführt ist. Sie weist als x-Schlitten einen Horizontal-Transport-Wagen 42 auf, der mittels in x-Richtung beabstandeter Rollen 43 spielfrei und verkantungsfrei auf den Führungen 39, 40 verschiebbar geführt ist. Der Antrieb erfolgt mittels eines als Getriebe-Motor ausgebildeten x-Elektro-Motors 44 über ein Zahnrad 44a und eine Zahnstange 44b oder alternativ über einen Zahnriementrieb. Alternativ kann der Antrieb auch mittels eines Linearmotors, insbesondere mittels eines Langstator-Linerantriebes, erfolgen.

Der Wagen 42 weist einen sich vertikal, also in y-Richtung erstreckenden Träger 45 auf, auf dem ein vertikal, also in y-Richtung, verschiebbarer y-Schlitten 47 mittels y-Führungen 46 verschiebbar angeordnet ist. Der Antrieb erfolgt jeweils mittels eines y-Elektro-Motors 49. Der sich im wesentlichen horizontal in z-Richtung erstreckende y-Schlitten 47 weist zwei z-Schienen 50 auf, auf denen jeweils ein jeweils von einem z-Elektro-Motor 51 antreibbarer z-Schlitten 52 bzw. 53 als z-Verschiebe-Einrichtung in z-Richtung verschiebbar geführt ist.

Die jeweils in x-Richtung vom y-Schlitten 47 in x-Richtung vorkragenden z-Schlitten 52, 53 tragen als Werkstück-Übergabemittel in z-Richtung zum Arbeitsraum 14 hin gerichtete Werkstück-Greifer 54 bzw. 55, die mit Greif-Backen 56 versehen sind, die jeweils mittels eines Greif-Backen-Antriebs 57 bzw. 58 geöffnet bzw. geschlossen werden können. Die Werkstück-Greifer 54, 55 sind also in y- Richtung gemeinsam und in z-Richtung unabhängig voneinander verfahrbar und können unabhängig voneinander geöffnet bzw. geschlossen werden. In x-Richtung haben sie eine zueinander vorgegebene feste Lage am Träger 45 des Wagens 42. Weiterhin ist jeweils ein Drehantrieb 54a bzw. 55a vorgesehen, mittels dessen der jeweilige Greifer 54 bzw. 55 um seine in z-Richtung verlaufende Mittelachse 54b bzw. 55b verschwenkbar ist.

Die Arbeitsweise wird anhand der Fig. 1 bis 3 und der Figuren 4 bis 7 erläutert, wobei letztere gegenüber der Ausgestaltung nach den Figuren 1 bis 3 stark vereinfacht sind. Aus diesem Grunde werden gegenüber den Figuren 1 bis 3 wesentlich vereinfachte Baugruppen mit derselben Bezugsziffer wie in Fig. 1 bis 3 bezeichnet, die aber mit einem hochgesetzten Strich versehen ist.

Wie der bereits erwähnten Fig. 4 zu entnehmen ist, sind eine größere Zahl von Werkzeug-Maschinen 36a bis 36f mittels der Transportbahn 38 miteinander verkettet, auf der die Be- und Entlade-Einrichtung 41' in x-Richtung verfahrbar ist. Der Transportbahn 38 ist eine Zu- und Abförder-Einrichtung 59 vorgeordnet, wobei es sich beispielsweise um ein Förderband handeln kann, auf dem zu bearbeitende Werkstücke 15, beispielsweise auf den Adapten 31 zugeführt und fertigbearbeitete Werkstücke 15 entsprechend mit ihren Adaptern 31 abgefördert werden. Zum Umsetzen der Werkstücke 15 von der Zu- und Abförder-Einrichtung 59 auf die Be- und Entlade-Einrichtung 41 bzw. von dieser auf die Zu- und Abförder-Einrichtung 59 ist eine Umsetz-Einrichtung 60 an der Stelle vorgesehen, wo sich die Transportbahn 38 und die Zu- und Abförder-Einrichtung 59 treffen.

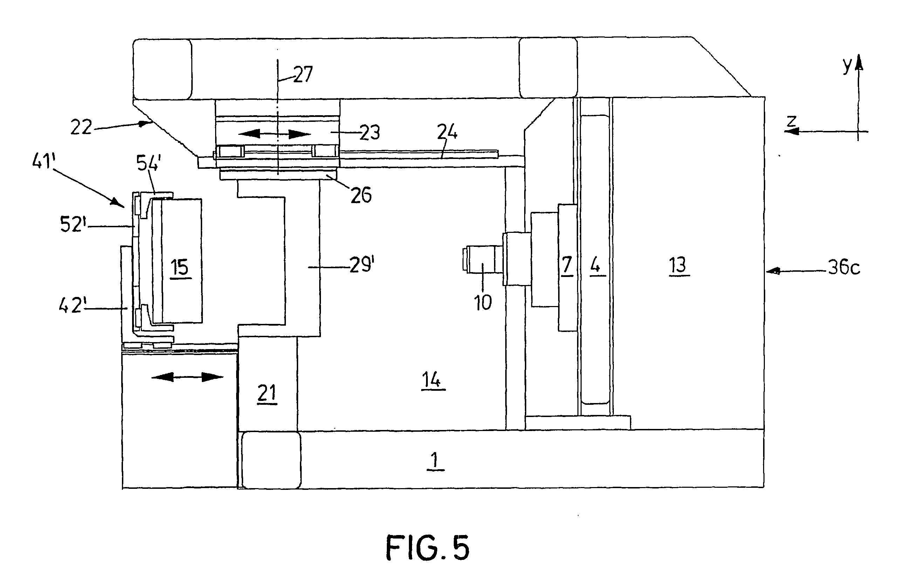

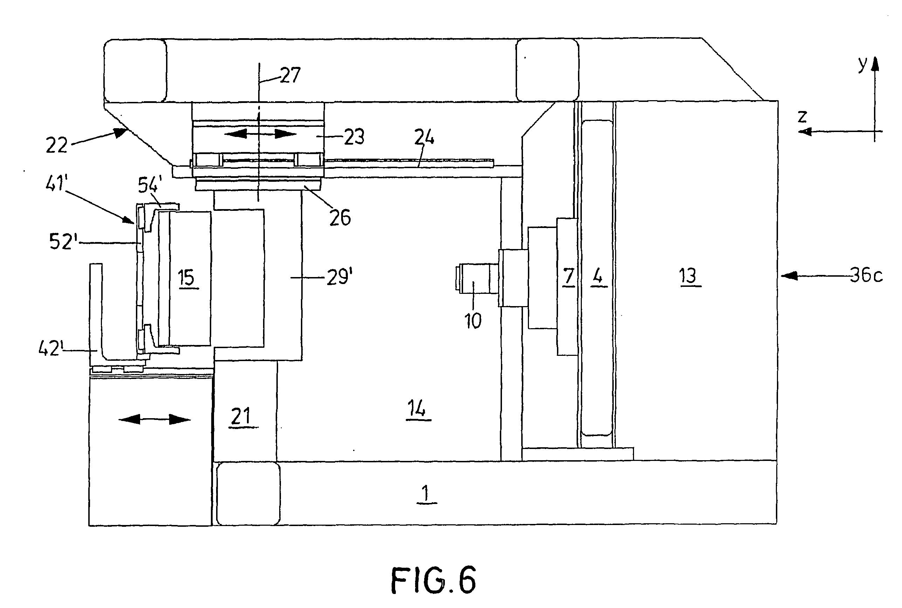

Wenn - wie während eines üblichen Fertigungsablaufes zu unterstellen ist - sich im Werkstück-Träger 29' ein bereits bearbeitetes Werkstück 15 befindet, dann befindet sich der Werkstück-Drehtisch 26 mit dem Werkstück-Träger 29' in der in Fig. 1, 5 und 6 dargestellten Übergabe-Position, die der Be- und Entlade-Einrichtung 41' benachbart ist. In dieser Stellung ist der Drehtisch 26 so verschwenkt, daß das in dieser Position in den Fig. 5 und 6 nicht dargestellte Werkstück 15 zur Einrichtung 41' hin gerichtet ist. Der kein Werkstück 15 enthaltende Greifer 54' kann dann durch entsprechendes Verfahren in y- und z-Richtung und Schließen der Greif-Backen 56 das Werkstück 15 ergreifen und nach Lösen der Spann-Backen 34 aus dem Träger 29' entnehmen. Der Greifer 54' wird dann in z-Richtung aus der Werkzeug-Maschine 36c herausgefahren. Danach wird der Horizontal-Transport-Wagen 42 so weit in x-Richtung und der Werkstück-Greifer 55' gegebenenfalls in y-Richtung so weit verfahren, daß das von ihm gehaltene zu bearbeitende Werkstück 15 vor den noch in der Übernahme-Position befindlichen Werkstück-Träger 29' gelangt, wie es in Fig. 5 dargestellt ist.

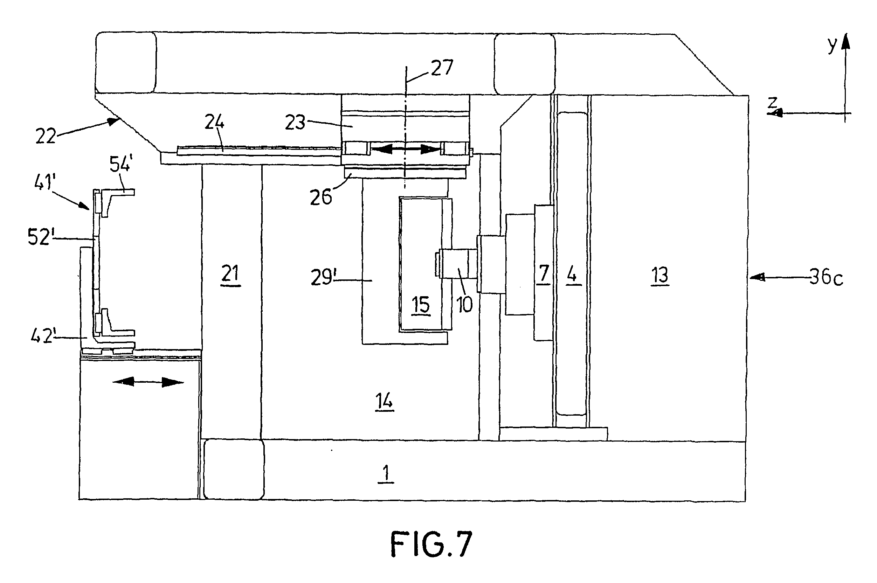

Anschließend wird der das zu bearbeitende Werkstück 15 haltende z-Schlitten 53' mit dem Greifer 55' aus der in Fig. 5 dargestellten x-Transport-Position entsprechend Fig. 6 zum Werkstück-Träger 29' hin verfahren, und zwar so weit, bis dieser das Werkstück 15 so aufnehmen kann, wie es in den Fig. 1 bis 3 dargestellt und oben geschildert ist. Nach dem Schließen der Spann-Vorrichtungen 32 werden die Greif-Backen 56 geöffnet, so daß das Werkstück 15 nunmehr ausschließlich im Werkstück-Träger 29 gehalten wird. Der z-Schlitten 23 wird dann in z-Richtung in Richtung auf das Werkzeug 16 verfahren, wobei es gleichzeitig um die Achse 27 geschenkt wird. In der in Fig. 7 dargestellten Position wird es dann bearbeitet. Die Relativbewegung zwischen dem Werkzeug 16 und dem Werkstück 15 werden hierbei durch den x-Schlitten 4, den y-Schlitten 7, den z-Schlitten 23 und den Drehtisch 26 ausgeführt.

Der Rücktransport des bearbeiteten Werkstücks 15' erfolgt dann in der bereits geschilderten Weise unter Verfahren des z-Schlittens 23 und unter Drehen des Werkstück-Drehtisches 26 in die Übergabe-Position.

Eine Bearbeitung erfolgt an jeder Werkzeug-Maschine 36a bis 36f. Damit alle Maschinen gleichzeitig arbeiten können, befinden sich auf der Transportbahn 38 eine oder mehrere Be- und Entlade-Einrichtungen.

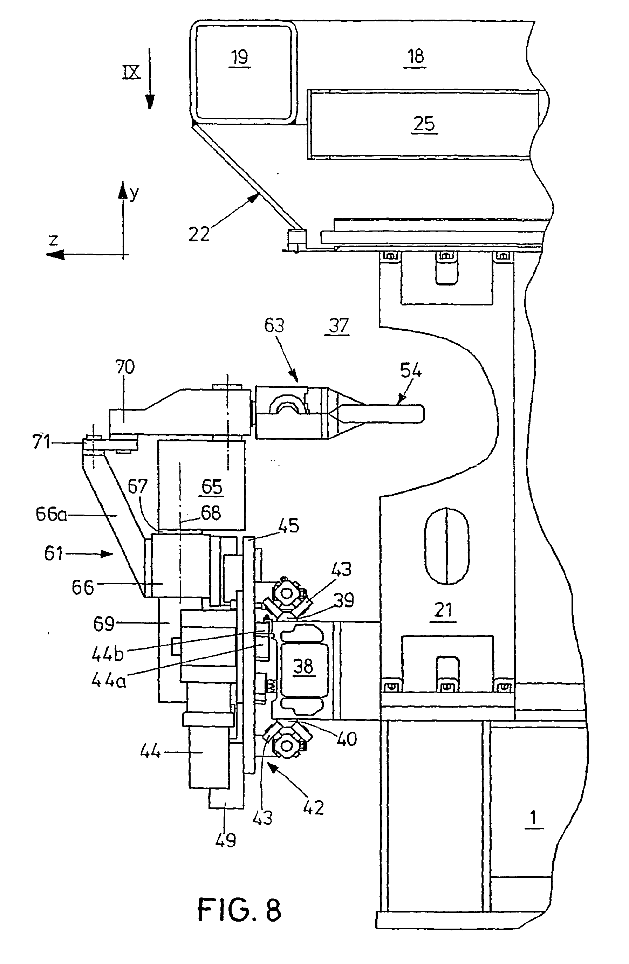

In den Fig. 8 bis 12 ist eine abgewandelte Ausführungsform einer Be- und Entlade-Einrichtung 61 dargestellt. Soweit in diesen mit den Fig. 1 bis 4 identische oder angenähert identische Teile vorhanden sind, werden sie mit denselben Bezugsziffern wie zuvor bezeichnet, wobei es keiner erneuten Beschreibung bedarf.

Der y-Schlitten 47 der Be- und Entlade-Einrichtung 61 ist von dem y-Elektro-Motor 49 über einen Kugelrollspindel-Trieb 62 vertikal antreibbar. Er weist zur Verschiebung der als Werkstück-Übergabemittel dienenden Werkstück-Greifer 54 bzw. 55 als z-Verschiebe-Einrichtungen 63, 64 Parallelogramm-Lenker auf. Sie weisen einen Haupt-Schwenkhebel 65 auf, der jeweils an einem am y-Schlitten 47 befestigten Gets-iebe-Gehäuse 66 in einem Schwenklager 67 um eine in y-Richtung, also vertikal, verlaufende Schwenkachse 68 schwenkbar gelagert ist. Der Schwenkantrieb erfolgt mittels eines elektrischen z-Schwenk-Antriebsmotors 69, der an das Getriebe-Gehäuse 66 angeflanscht ist. Mit seinem dem Schwenklager 67 entgegengesetzten Ende ist jeder Haupt-Schwenkhebel 65 mit einem die jeweiligen Werkstück-Greifer 54 bzw. 55 tragenden Halter 70 schwenkbar verbunden. Parallel zum Haupt-Schwenkhebel 65 ist ein Parallel-Führungshebel 71 vorgesehen, der einerseits an einem am Gehäuse 66 angebrachten Ausleger 66a und andererseits am Halter 70 angelenkt ist, so daß der jeweilige Halter 70 mit dem Greifer 54 bzw. 55 bei Schwenkbewegungen des Haupt-Schwenkhebels 65 parallel zu sich selbst verschoben wird. Am Halter 70 ist im übrigen der Dreh-Antrieb 54a bzw. 55a angebracht, mittels dessen der jeweilige Greifer 54 bzw. 55 um seine in z-Richtung verlaufende Mittelachse 54b bzw. 55b schwenkbar ist.

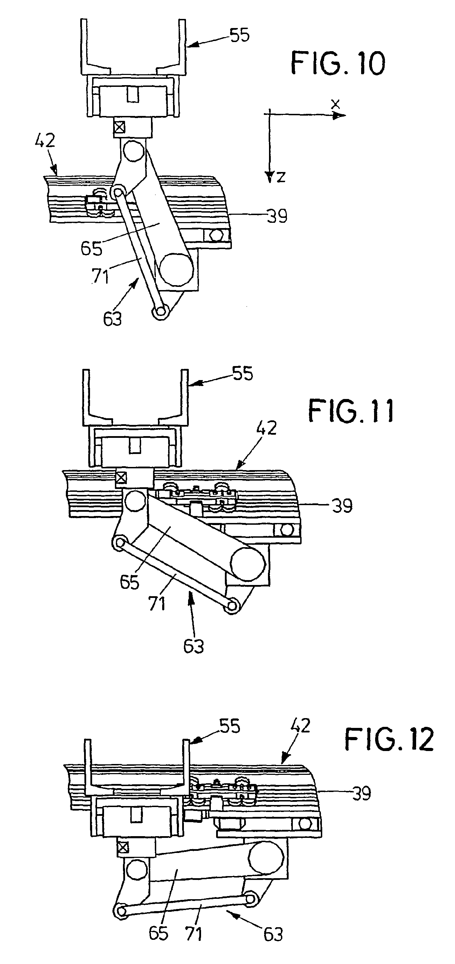

Aus den Teil-Darstellungen in den Fig. 10 bis 12 ergibt sich, daß dann, wenn die Werkstück-Greifer 54 oder 55 nicht nur parallel zu sich, sondern geradlinig in z-Richtung verschoben werden sollen, je nach Schwenkstellung der Schwenkhebel 65 mit Führungshebel 71 der Horizontal-Transport-Wagen 42 in x-Richtung verfahren werden muß. Die erwähnte geradlinige Verschiebung der Greifer 54, 55 wird also durch eine überlagerte Bewegung der z-Verschiebe-Einrichtungen 63 und der Horizontal-Transport-Wagen 42 bewirkt. Um dies zu veranschaulichen, sind die Werkstück-Greifer 55 in den Fig. 10, 11 und 12 exakt übereinander darstellt, so daß erkennbar ist, in welcher Weise der Horizontal-Transport-Wagen 42 in x-Richtung verfahren werden muß, um die geradlinige Bewegung der Greifer 55 zu erreichen. Der Arbeitsablauf entspricht ansonsten dem bereits beschriebenen.

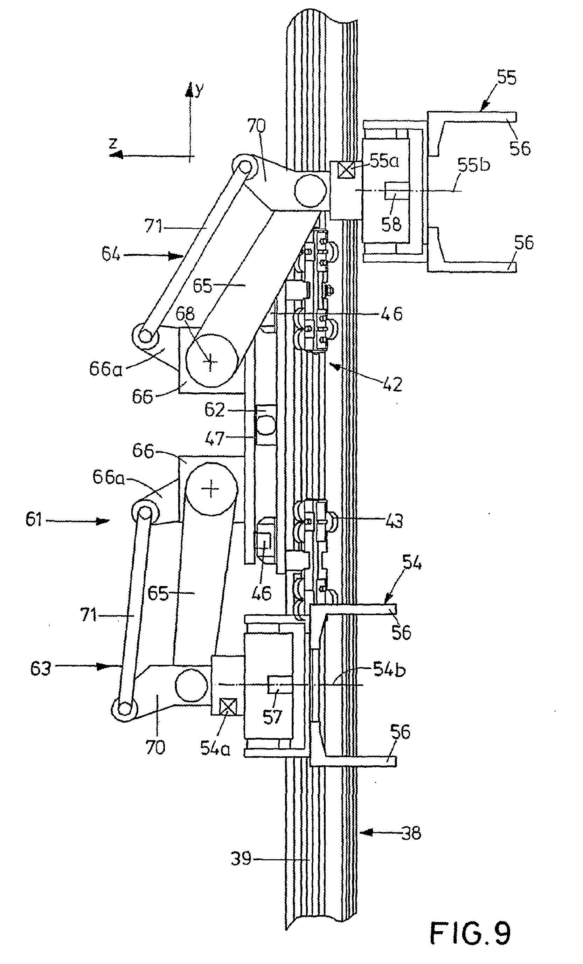

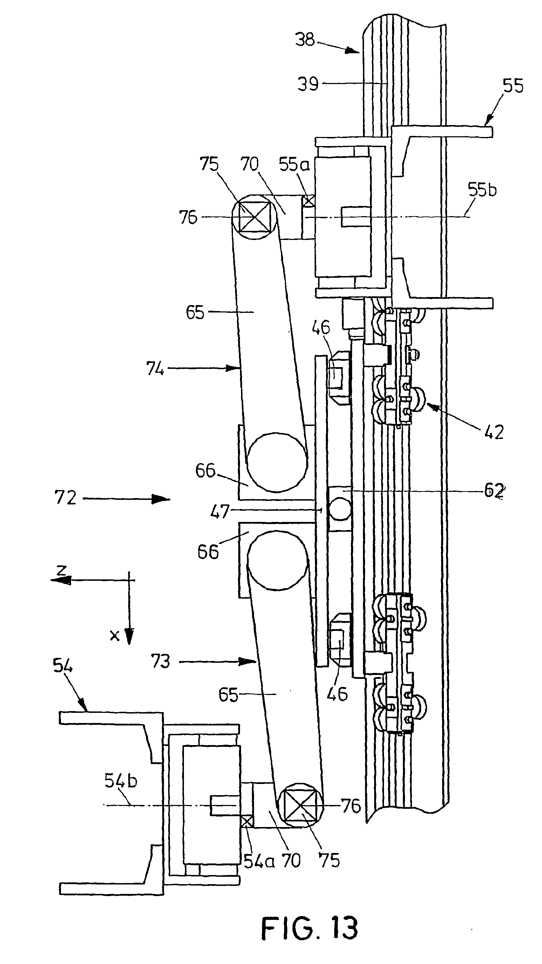

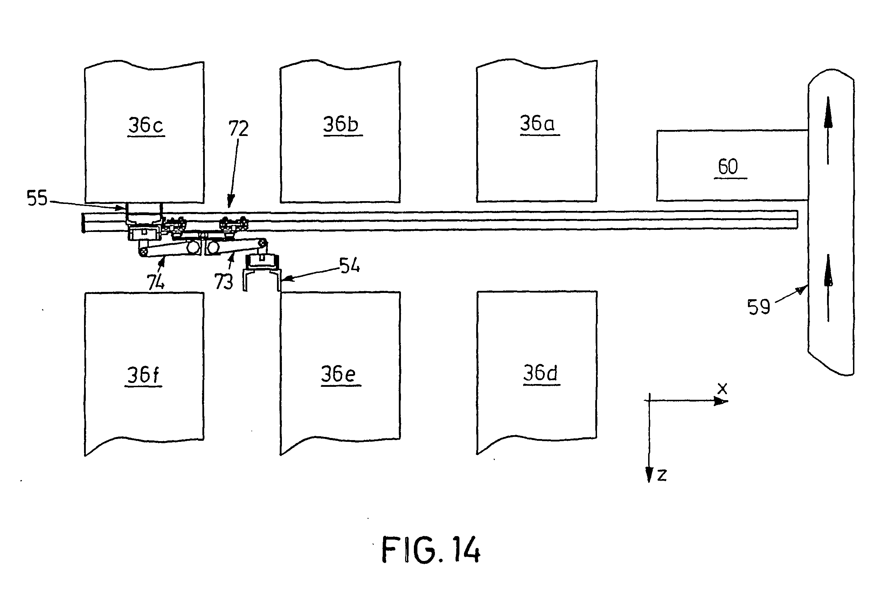

Bei dem Ausführungsbeispiel nach den Fig. 13 und 14 werden wiederum mit bereits beschriebenen Teilen identische oder sehr ähnliche Teile mit denselben Bezugsziffern bezeichnet, ohne daß es einer erneuten Beschreibung bedürfte. Die dort dargestellte Be- und Entlade-Einrichtung 72 weist eine z-Verschiebe-Einrichtung 73 bzw. 74 auf, die anstelle des nach Fig. 9 vorgesehenen Parallelogramm-Lenkers nur einen Haupt-Schwenkhebel 65 aufweist. Dieser Haupt-Schwenkhebel 65 ist schwenkbar am y-Schlitten 47 gelagert und mittels des jeweiligen z-Schwenk-Antriebes 69 verschwenkbar. Der den jeweiligen Werkstück-Greifer 54 bzw. 55 tragende Halter 70 ist mit dem Haupt-Schwenkhebel 65 über einen Führungs-Antriebsmotor 75 verbunden, mittels dessen jede beliebige Bewegung des Greifers 54 bzw. 55 um eine in y-Richtung verlaufende Schwenkachse 76 möglich ist.

Wie Fig. 13 in Verbindung mit Fig. 14 entnehmbar ist, können mit dieser Be- und Entlade-Einrichtung 72 auch in zwei Reihen einander gegenüberstehende Werkzeug-Maschinen 36a bis 36f bedient werden. Hierbei kann ein Greifer 55 zur Bedienung der - in Fig. 14 oben dargestellten - Reihe von Werkzeug-Maschinen 36a bis 36c eingesetzt werden, während der andere Greifer 54 zur Bedienung der - in Fig. 14 unten dargestellten - Reihe von Werkzeug-Maschinen 36d bis 36f eingesetzt wird. Beide Greifer 54, 55 können aber auch jeweils für nur eine Reihe eingesetzt werden. Die Flexibilität ist fast unbegrenzt.

## Patentansprüche

1. Anlage zur Bearbeitung von Werkstücken (15),
- mit mindestens einer Werkzeug-Maschine (36), die
-- in Maschinenbett (1),
-- einen mit dem Maschinenbett (1) verbundenen Ständer (2),
-- eine mittels einer am Ständer (2) angeordneten Arbeits-Spindel-Bewegungs-Einheit (13) in einer durch eine horizontale x-Richtung und eine vertikale y-Richtung aufgespannten Ebene bewegbare, zur Aufnahme eines Werkzeugs (16) ausgebildete, senkrecht zu der Ebene in einer z-Richtung verlaufende Arbeits-Spindel (10),
-- einen in z-Richtung vor der Arbeits-Spindel (10) auf dem Maschinenbett (1) angeordneten Arbeitsraum (14) und
-- im Arbeitsraum (14) angeordnete in z-Richtung verschiebbare Werkstück-Aufnahmemittel (29) mit Haltemitteln (32) für ein Werkstück (15),
aufweist und
- mit mindestens einer Be- und Entlade-Einrichtung (41, 61, 72),
-- wobei die Be- und Entlade-Einrichtung (41, 61, 72) in z-Richtung vor der der Arbeits-Spindel (10) abgewandten Seite des Arbeitsraums (14) vor der Werkzeug-Maschine (36) angeordnet ist,
-- wobei vor der Werkzeug-Maschine (36) eine im wesentlichen in x-Richtung verlaufende Transportbahn (38) angeordnet ist, auf der die Be- und Entlade-Einrichtung (41) verfahrbar gelagert ist,
-- wobei die Be- und Entlade-Einrichtung (41, 61, 72) mindestens ein Werkstück-Übergabemittel (54, 55) aufweist und
-- wobei das Werkstück-Übergabemittel (54, 55) in z-Richtung zur Übergabe eines Werkstücks (15) von dem Werkstück-Übergabemittel (54, 55) auf das Werkstück-Aufnahmemittel (29) und umgekehrt bewegbar ist,
**dadurch gekennzeichnet,**
**dass** die Werkzeug-Maschine (36) ein den Arbeitsraum (14) umgrenzendes Gestell (22) aufweist, das einen oberen aus sich in z-Richtung erstreckenden Längsträgern (18) und sich in x-Richtung erstreckenden Querträgern (19, 20) bestehenden Rahmen (17) aufweist, der sich an seinem dem Ständer (2) abgewandten Ende über Stützen (21) auf dem Maschinenbett (1) abstützt,
**dass** das Werkstück-Aufnahmemittel (29) hängend mit einem in y-Richtung über ihm angeordneten z-Schlitten (23) verbunden ist, der auf mit dem Gestell (22) verbundenen z-Führungen (24) in z-Richtung verschiebbar ausgebildet ist, und
**dass** das Werkstück-Übergabemittel (54, 55) in z-Richtung verschiebbar ausgebildet ist und zwar
- entweder mittels eines um eine in y-Richtung verlaufende Schwenkachse (68) schwenkantreibbaren Schwenkhebels (65), wobei das Werkstück-Übergabemittel (54, 55) mittels eines Halters (70) mit dem Schwenkhebel (65) schwenkbar verbunden ist und wobei entweder parallel zum Schwenkhebel (75) ein Parallel-Führungshebel (71) oder zwischen dem Halter (70) und dem Schwenkhebel (65) ein Führungs-Antriebsmotor (75) vorgesehen ist
- oder geradlinig in z-Richtung.

2. Anlage nach Anspruch 1, **dadurch gekennzeichnet,**
**dass** die Be- und Entlade-Einrichtung (41, 61, 72) einen auf der Transportbahn (38) verfahrbaren x-Schlitten (38) aufweist, der mit mindestens einer in z-Richtung bewegbaren z-Verschiebe-Einrichtung (52, 53; 63, 64; 73, 74) versehen ist, an der das Werkstück-Übergabemittel (54,. 55) angeordnet ist.

3. Anlage nach Anspruch 1, **dadurch gekennzeichnet,**
**dass** das Werkstück-Übergabemittel als Werkstück-Greifer (54, 55) ausgebildet ist.

4. Anlage nach Anspruch 1, **dadurch gekennzeichnet,**
**dass** mehrere Werkzeug-Maschinen (36a bis 36f) in einer Reihe nebeneinander angeordnet sind, und
**dass** die Transportbahn (38) vor den Werkzeug-Maschinen (36a bis 36f) verläuft.

5. Anlage nach Anspruch 1, **dadurch gekennzeichnet,**
**dass** mehrere Werkzeug-Maschinen (36a bis 36f) in zwei Reihen einander gegenüber angeordnet sind, und
**dass** die Transportbahn (38) zwischen den beiden Reihen von Werkzeug-Maschinen (36a bis 36f) verläuft.

6. Anlage nach Anspruch 1, **dadurch gekennzeichnet,**
**dass** die Be- und Entlade-Einrichtung (41, 61, 72) in x-Richtung nebeneinander zwei unabhängig voneinander betätigbare Werkstück-Übergabemittel (54, 55) aufweist.

7. Anlage nach Anspruch 1, **dadurch gekennzeichnet,**
**dass** das mindestens eine Werkstück-Übergabemittel (54, 55) in y-Richtung verschiebbar ausgebildet ist.

8. Anlage nach Anspruch 1, **dadurch gekennzeichnet,**
**dass** das Werkstück-Übergabemittel (54, 55) einen Greifer-Antrieb (57, 58) aufweist.

9. Anlage nach Anspruch 1, **dadurch gekennzeichnet,**
**dass** das Werkstück-Übergabemittel (54, 55) um eine in z-Richtung verlaufende Mittelachse (54b, 55b) schwenkbar ist.

10. Anlage nach Anspruch 1, **dadurch gekennzeichnet,**
**dass** das Werkstück-Aufnahmemittel (29) hängend an einem in y-Richtung über ihm angeordneten, um eine in y-Richtung verlaufende Achse (27) drehbaren Werkstück-Drehtisch (26) angebracht ist, der an der Unterseite des z-Schlittens (23) angebracht ist.

## Claims

1. Installation for machining work pieces (15), comprising
- at least one machine tool (36), which has
-- a machine bed (1),
-- a frame (2) joined to the machine bed (1),
-- a work spindle (10), which, by means of a work spindle motion unit (13) that is disposed on the frame (2), is movable on a plane spanned by a vertical x direction and a horizontal y direction, and which is designed for holding a tool (16), and which extends vertically to the plane in a z direction,
-- a working area (14) disposed on the machine bed (1) in front of the work spindle (10) in the z direction, and
-- work piece holding means (29) disposed in the working area (14) which are displaceable in the z direction and which include chucking devices (32) for a work piece (15) and
- at least one supply and take-down equipment (41, 61, 72)
-- wherein the supply and take-down equipment (41, 61, 72) is disposed in front of the machine tool (36) and - in the z direction - in front of the side of the working area (14) that faces away from the work spindle (10),
-- wherein a conveyor path (38), which extends substantially in the x direction and on which the supply and take-down equipment (41) is displaceably supported, is disposed in front of the machine tool (36),
-- wherein the supply and take-down equipment (41, 61, 72) has at least one work piece transfer means (54, 55); and
-- wherein the work piece transfer means (54, 55) is displaceable in the z direction for transfer of a work piece (15) from the work piece transfer means (54, 55) to the work piece holding means (29) and vice versa,
**characterized**
**in that** the machine tool (36) has a machine frame (22), encircling the working area (14), that has a top frame (17) which is composed of longitudinal beams (18) that extend in the z direction and crossbeams (19, 20) that extend in the x direction and, on its end facing away from the frame (2), is supported on the machine bed (1) via props (21),
**in that** the work piece holding means (29) is suspended on a z skid (23) that is disposed above the work piece holding means (29) in the y direction and is displaceable in the z direction along z guides (24) that are joined to the machine frame (22), and
**in that** the work piece transfer means (54, 55) is displaceable in the z direction, namely
- either by means of a pivoted lever (65) which is pivotally drivable about a pivot axis (68) that extends in the y direction, wherein the work piece transfer means (54, 55) is pivotally connected to the pivoted lever (65) by means of a holder (70) and wherein either a parallel-motion lever (71) is provided parallel to the pivoted lever (65) or a guide driving motor (75) is provided between the holder (70) and the pivoted lever (65),
- or linearly in the z direction.

2. Installation according to claim 1, **characterized**
**in that** the supply and take-down equipment (41, 61, 72) comprises an x skid (38), which is displaceable on the conveyor path (38) and is provided with at least one z-displacement means (52, 53; 63, 64; 73, 74) which is displaceable in the z direction and on which the work piece transfer means (54, 55) is mounted.

3. Installation according to claim 1, **characterized**
**in that** the work piece transfer means is a work piece gripper (54, 55).

4. Installation according to claim 1, **characterized**
**in that** several machine tools (36a to 36f) are arranged side by side in a row; and
**in that the** conveyor path (38) extends in front of the machine tools (36a to 36f).

5. Installation according to claim 1, **characterized**
**in that** several machine tools (36a to 36f) are arranged in two opposite rows; and
**in that** the conveyor path (38) extends between the two rows of machine tools (36a to 36f).

6. Installation according to claim 1, **characterized**
**in that** the supply and take-down equipment (41, 61, 72) comprises two work piece transfer means (54, 55), which are disposed side by side in the x direction and are actuatable independently of one another.

7. Installation according to claim 1, **characterized**
**in that** the at least one work piece transfer means (54, 55) is displaceable in the y direction.

8. Installation according to claim 1, **characterized**
**in that** the work piece transfer means (54, 55) comprises a gripper drive (57, 58).

9. Installation according to claim 1, **characterized**
**in that** the work piece transfer means (54, 55) is pivotable about a center line (54b, 55b) that extends in the z direction.

10. Installation according to claim 1, **characterized**
**in that** the work piece holding means (29) is suspended on a work piece turntable (26) which is disposed above the work piece holding means (29) in the y direction, is rotatable about an axis (27) that extends in the y direction, and is mounted to the underside of the z skid (23).

## Revendications

1. Dispositif d'usinage de pièces à usiner (15)
- avec au moins une machine-outil (36) qui présente
-- dans le banc de machine (1)
-- un pilier (2) relié au banc de machine (1),
-- un bras de travail (10) mobile sur un plan tendu par un sens x horizontal et un sens y vertical, à l'aide d'une unité de mouvement de bras de travail (13) placée sur le pilier (2) et qui sert à recevoir un outil (16) et disposée verticalement au plan dans un sens z,
-- une chambre de travail (14) placée sur le banc de machine (1) dans un sens z devant le bras de travail (10) et
-- des moyens de réception de pièces à usiner (29), équipés de moyens de retenue (32) pour une pièce à usiner (15), et qui sont placés dans la chambre de travail (14) et déplaçables dans un sens z,
- avec au moins un dispositif de chargement et de déchargement (41, 61, 72),
-- où le dispositif de chargement et de déchargement (41, 61, 72) est disposé dans un sens z devant le côté de la chambre de travail (14) tournant le dos au bras de travail (10) devant la machine-outil (36),
-- où, devant la machine-outil (36), est disposé un tapis roulant (38) circulant essentiellement dans un sens x et sur lequel le dispositif de chargement et de déchargement (41) peut être déplacé,
-- où le dispositif de chargement et de déchargement (41, 61, 72) présente au moins un moyen de transmission de pièce à usiner (54, 55) et
-- où le moyen de transmission de pièce à usiner (54, 55) se déplace dans un sens z pour la transmission d'une pièce à usiner (15) du moyen de transmission de pièce à usiner (54, 55) vers le moyen de réception de pièce à usiner (29) et inversement,
**caractérisé**
**en ce que** la machine-outil (36) présente un bâti (22) délimitant la chambre de travail (14), qui lui-même présente un cadre (17) duquel un support longitudinal (18) s'étire dans un sens z et un support transversal (19, 20) s'étire dans un sens x et qui s'appuie au niveau de son extrémité opposée au pilier (2), contre le banc de machine (1) à l'aide d'un pied d'appui (21),
**en ce que** le moyen de réception de pièce à usiner (29) est suspendu à un chariot z (23) placé au-dessus de lui dans un sens y, qui peut être déplacé dans un sens z sur des guides z (24) reliés au bâti (22) et
**en ce que** le moyen de transmission de pièces à usiner (54, 55) est déplaçable dans un sens z
- soit par le biais d'un levier pivotant (65) pouvant pivoter autour d'un axe pivotant (68) s'étirant dans un sens y, où le moyen de transmission de pièce à usiner (54, 55) est relié au levier pivotant (65) de façon à pouvoir pivoter, à l'aide d'un support (70) et où il est prévu soit un levier de guidage parallèle (71), parallèle au levier pivotant (65), soit un moteur d'actionnement de guidage (75) entre le support (70) et le levier pivotant (65)
- soit tout droit dans le sens z

2. Dispositif selon la revendication 1, **caractérisé en ce que** le dispositif de chargement et de déchargement (41, 61, 72) présente un chariot x (38) déplaçable sur le tapis roulant (38), qui est équipé d'au moins un dispositif de déplacement z (52, 53 ; 63, 64 ; 73, 74) bougeant dans le sens z, sur lequel est placé le moyen de transmission de pièce à usiner (54, 55).

3. Dispositif selon la revendication 1, **caractérisé en ce que** le dispositif de transmission de pièce à usiner est conçu comme un préhenseur de pièce à usiner (54, 55).

4. Dispositif selon la revendication 1, **caractérisé en ce que** plusieurs machines-outils (36a à 36f) sont disposées en ligne les unes à côté des autres et **en ce que** le tapis roulant (38) circule devant les machines-outils (36a à 36f).

5. Dispositif selon la revendication 1, **caractérisé en ce que** plusieurs machines-outils (36a à 36f) sont disposées sur deux rangées placées en vis-à-vis, et **en ce que** le tapis roulant (38) circule entre les deux rangées de machines-outils (36a à 36f).

6. Dispositif selon la revendication 1, **caractérisé en ce que** le dispositif de chargement et de déchargement (41, 61, 72) présente deux moyens de transmission de pièce à usiner (54, 55) actifs indépendamment l'un de l'autre, disposés l'un à côté de l'autre dans le sens x.

7. Dispositif selon la revendication 1, **caractérisé en ce que** au moins un moyen de transmission de pièce à usiner (54, 55) est déplaçable dans le sens y.

8. Dispositif selon la revendication 1, **caractérisé en ce que** le moyen de transmission de pièce à usiner (54, 55) présente un actionneur de préhenseur (57, 58).

9. Dispositif selon la revendication 1, **caractérisé en ce que** le moyen de transmission de pièce à usiner (54, 55) pivote autour d'un axe central (54b, 55b) s'étirant dans le sens z.

10. Dispositif selon la revendication 1, **caractérisé en ce que** le moyen de réception de pièce à usiner (29) est placé en suspend sur une table rotative à pièce à usiner (26), disposée au-dessus de lui dans le sens y et pivotante autour d'un axe (27) s'étirant dans le sens y, qui est placée sur le dessous du chariot z (23).
